# EUROPEAN PATENT APPLICATION

(11) **EP 4 760 223 A1**
(43) Date of publication of application: **17.06.2026**
(21) Application number: 25854534.2
(22) Date of filing: 14.07.2025
(51) Int. Cl.: G01K 1/14, H01M 10/48

(54) **APPARATUS FOR MEASURING TEMPERATURE OF BATTERY CELL AND METHOD FOR MEASURING TEMPERATURE OF BATTERY CELL USING SAME**

(30) Priority: 14.08.2024 KR 20240109286
(71) Applicant: LG Energy Solution, Ltd., Seoul 07335 (KR)
(72) Inventor: LEE, Seo Ho, Daejeon 34122 (KR); YOON, Hye Rin, Daejeon 34122 (KR)
(74) Representative: Goddar, Heinz J.
(86) International application number: PCT/KR2025/010291
(87) International publication number: WO 2026/038721

(57) **Abstract**

Disclosed are a battery cell temperature measurement apparatus and a battery cell temperature measurement method using the same, and more particularly a battery cell temperature measurement apparatus including a first plate in tight contact with one surface of a battery cell, a second plate in tight contact with the other surface of the battery cell, the second plate including at least one through-hole, a connection unit including a first connection unit detachably coupled to the through-hole, a temperature measurement unit extending through the connection unit and the through-hole, the temperature measurement unit being configured to measure the temperature of the battery cell, and a fastening unit coupled to the connection unit and located on an outer circumferential surface of the through-hole, and a battery cell temperature measurement method using the same.

## Description

### [Technical Field]

This application claims the benefit of priority to Korean Patent Application No. 2024-0109286 filed on August 14, 2024, the disclosure of which is incorporated herein by reference in its entirety.

The present invention relates to a battery cell temperature measurement apparatus and a battery cell temperature measurement method using the same, and more particularly to a battery cell temperature measurement apparatus capable of measuring changes in temperature of a battery cell in the state in which ambient temperature is blocked and the battery cell is stably fixed and a battery cell temperature measurement method using the same.

### [Background Art]

With recent development of alternative energies due to air pollution and energy depletion caused as the result of use of fossil fuels, demand for secondary batteries capable of storing electrical energy that is produced has increased.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

Meanwhile, in a process of charging and discharging a battery cell or a process of testing the performance of the battery cell, changes in temperature of the battery cell are measured through a temperature measurement member to determine whether the battery cell is abnormal.

However, the temperature measurement member may be detached from the battery cell while changes in temperature of the battery cell are measured, whereby accurate temperature measurement may be impossible.

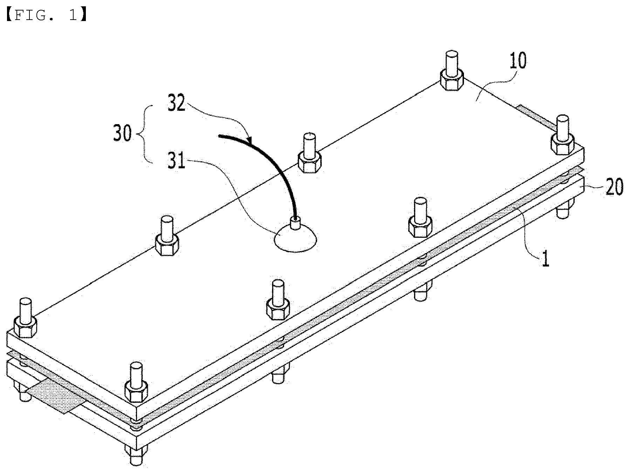

FIG. 1 is a schematic view of a conventional battery cell jig for temperature measurement. As shown in FIG. 1, the conventional battery cell jig includes a first plate 10 on which a battery cell 1 is seated, a second plate 20 in tight contact with an upper surface of the battery cell 1, and a temperature measurement unit 30 in tight contact with the first plate 10, the temperature measurement unit being configured to measure changes in temperature of the battery cell 1.

The conventional temperature measurement unit 30 includes a suction pad 31 and a cable 32. The suction pad 31 is formed in the shape of a hemispherical body, and is configured to have a structure in which, when pressure is applied thereto, air escapes from an empty space in the hemispherical body, thereby performing suctioning.

However, the temperature measurement unit may be easily separated from the first plate 10 if the first plate has a scratch or if external impact is applied thereto.

### (Prior Art Document)

(Patent Document 1) Korean Patent Application Publication No. 2023-0045407

### [Disclosure]

### [Technical Problem]

The present invention has been made in view of the above problems, and it is an object of the present invention to provide a battery cell temperature measurement apparatus having a structure in which a temperature measurement unit configured to measure the temperature of a battery cell can be stably fixed at a predetermined position, thereby improving the reliability of the measurement results, and a battery cell temperature measurement method using the same.

### [Technical Solution]

A battery cell temperature measurement apparatus according to the present invention to accomplish the above object includes a first plate (100) in tight contact with one surface of a battery cell (S), a second plate (200) in tight contact with the other surface of the battery cell (S), the second plate including at least one through-hole (210), a connection unit (300) including a first connection unit (310) detachably coupled to the through-hole (210), a temperature measurement unit (400) extending through the connection unit (300) and the through-hole (210), the temperature measurement unit being configured to measure the temperature of the battery cell (S), and a fastening unit (220) coupled to the connection unit (300) and located on an outer circumferential surface of the through-hole (210).

In the battery cell temperature measurement apparatus according to the present invention, the fastening unit (220) may include a first support portion (221) extending a certain length in the state in which one side thereof is fixed to the second plate (200); a second flange-shaped support portion (222) located on an edge of the other side of the first support portion (221); and a receiving protrusion (223) located on the second flange-shaped support portion (222), the receiving protrusion being bent at a certain angle, and the first connection unit (310) may include a first cylindrical extension portion (311) extending a certain length; a first flange portion (312) located on an outer surface of the first cylindrical extension portion (311); and a first connection protrusion (313) located on a lower surface of the first flange portion (312) and fastened to the receiving protrusion (223), the first connection protrusion being bent at a certain angle.

In the battery cell temperature measurement apparatus according to the present invention, the first connection unit (310) may include an insulating material.

In the battery cell temperature measurement apparatus according to the present invention, the insulating material may include at least one of Bakelite, PVC, Teflon, and silicone rubber.

In the battery cell temperature measurement apparatus according to the present invention, when the fastening unit (220) and the first connection unit (310) are fastened together, an edge of one side of the first extension portion (311) of the first cylindrical connection unit (310) comes into tight contact with an inner surface of the through-hole (210) of the second plate (200).

In the battery cell temperature measurement apparatus according to the present invention, the temperature measurement unit (400) may include a temperature sensor (410) in tight contact with one surface of the battery cell (S), a cable (420) connected to the temperature sensor (410), the cable having a certain length, and a cylindrical packing member (430) wrapping around the cable (420), the cylindrical packing member having an outer diameter in tight contact with an inner surface of the first cylindrical extension portion (311).

In the battery cell temperature measurement apparatus according to the present invention, the at least one through-hole (210) of the second plate (200) may be a plurality of through-holes, and the battery cell temperature measurement apparatus may further include a second connection unit (320) configured to seal at least one through-hole of the plurality of through-holes (210).

In the battery cell temperature measurement apparatus according to the present invention, the plurality of through-holes (210) may be spaced apart at predetermined intervals in an overall length direction or an overall width direction of the battery cell.

In the battery cell temperature measurement apparatus according to the present invention, the second connection unit (320) may include a second cylindrical extension portion (321) extending a certain length, a second flange portion (322) located on an outer surface of the second cylindrical extension portion (321), and a second connection protrusion (323) located on a lower surface of the second flange portion (322) and fastened to the receiving protrusion (223), the second connection protrusion being bent at a certain angle, and one side or the other side of the second cylindrical extension portion (321) may be sealed.

A battery cell temperature measurement method according to the present invention includes a first step of placing a battery cell between the first plate and the second plate, a second step of fixing the first plate and the second plate, and a third step of connecting the first connection unit to the fastening unit located on the second plate and measuring the temperature of the battery cell using the temperature measurement unit.

### [Advantageous Effects]

As is apparent from the above description, a battery cell temperature measurement apparatus according to the present invention and a battery cell temperature measurement method using the same have the advantage that a fastening unit is provided on a plate and a connection unit structurally attached to and detached from the fastening unit is provided, whereby it is possible to minimize separation of a temperature measurement unit due to external impact, etc.

In addition, the battery cell temperature measurement apparatus according to the present invention and the battery cell temperature measurement method using the same have the merit that the plate is provided with a plurality of through-holes for temperature measurement, whereby it is possible to selectively measure the temperature of a battery cell at a plurality of positions.

Furthermore, the battery cell temperature measurement apparatus according to the present invention and the battery cell temperature measurement method using the same have the advantage that a connection unit made of an insulating material is located around a temperature sensor, whereby it is possible to minimize the influence of ambient temperature, which may improve the reliability of the measurement results.

### [Description of Drawings]

FIG. 1 is a schematic view of a conventional battery cell jig for temperature measurement.
FIG. 2 is a perspective view showing a battery cell temperature measurement apparatus according to a first embodiment of the present invention.
FIG. 3 is an exploded perspective view of the battery cell temperature measurement apparatus shown in FIG. 2.
FIG. 4 is an enlarged perspective view illustrating a coupling structure between a fastening unit and a first connection unit in the battery cell temperature measurement apparatus shown in FIG. 2.
FIG. 5 is a partial vertical sectional view taken along line A-A of FIG. 2.
FIG. 6 is a perspective view showing a battery cell temperature measurement apparatus according to a second embodiment of the present invention.
FIG. 7 is an exploded perspective view of the battery cell temperature measurement apparatus shown in FIG. 6.
FIG. 8 is an enlarged perspective view illustrating a coupling structure between a fastening unit and a second connection unit in the battery cell temperature measurement apparatus shown in FIG. 6.
FIG. 9 is a partial vertical sectional view taken along line B-B of FIG. 6.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery cell temperature measurement apparatus according to the present invention and a battery cell temperature measurement method using the same will be described with reference to the accompanying drawings.

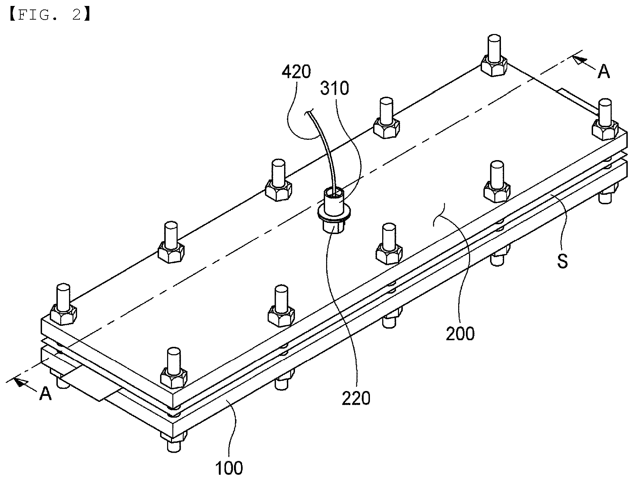

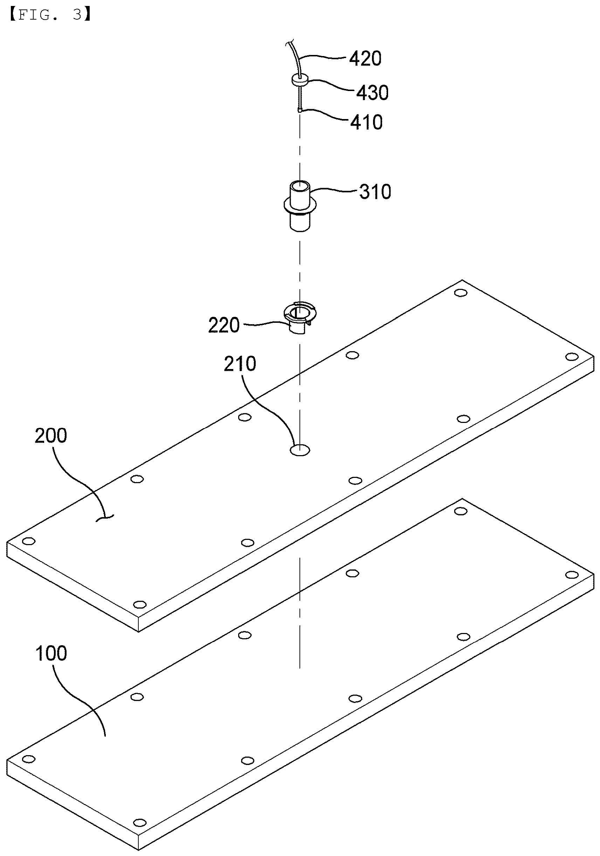

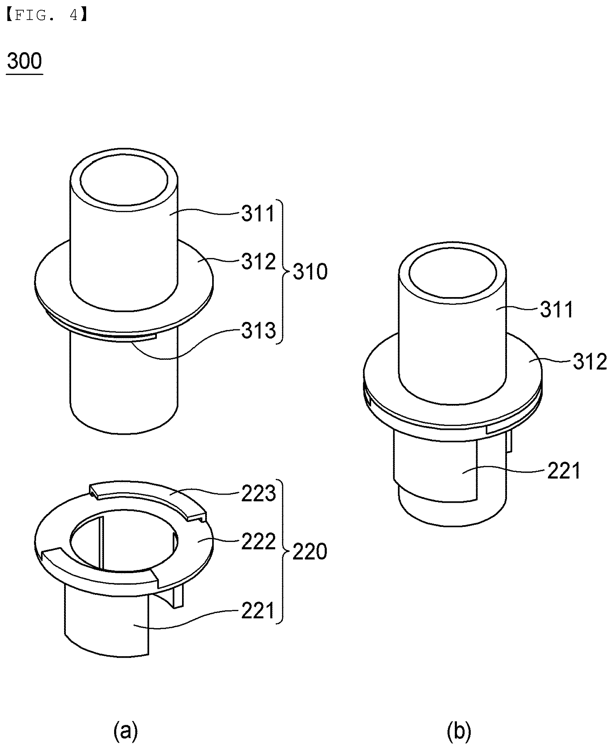

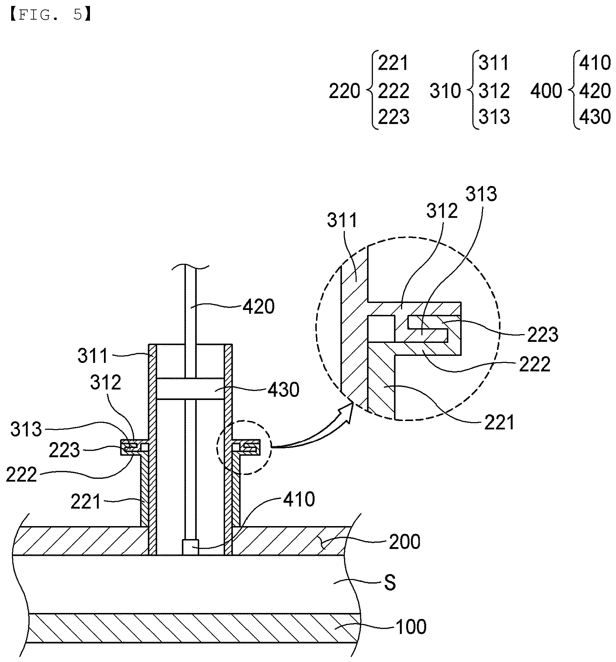

FIG. 2 is a perspective view showing a battery cell temperature measurement apparatus according to a first embodiment of the present invention, FIG. 3 is an exploded perspective view of the battery cell temperature measurement apparatus shown in FIG. 2. In addition, FIG. 4 is an enlarged perspective view illustrating a coupling structure between a fastening unit and a first connection unit in the battery cell temperature measurement apparatus shown in FIG. 2, and FIG. 5 is a partial vertical sectional view taken along line A-A of FIG. 2.

Referring to FIGs. 2 to 5, the battery cell temperature measurement apparatus according to the first preferred embodiment of the present invention includes a first plate 100, a second plate 200, a connection unit 300, and a temperature measurement unit 400.

First, the first plate 100 is formed in a flat plate shape with a certain area, and serves to support a lower surface of a battery cell S to be measured.

The second plate 200 is formed in a flat plate shape in tight contact with an upper surface of the battery cell S seated on the first plate 100, and is provided with a through-hole 210 and a fastening unit 220.

Here, the through-hole 210 is formed through the second plate 200 in a thickness direction, and allows a temperature sensor 410 of the temperature measurement unit 400 to extend therethrough.

The fastening unit 220 is provided above the through-hole 210, i.e., above the second plate 200, along an edge of the through-hole 210, and is detachably coupled to a first connection unit 310. The fastening unit includes a first support portion 221, a second support portion 222, and a receiving protrusion 223.

Specifically, the first support portion 221 is formed so as to extend a certain length in a vertical direction in the state in which one side of the first support portion is fixed to the edge of the through-hole 210 of the second plate 200.

In other words, the first support portion 221 may be formed as a structure extending from a part of the edge of the through-hole 210 in the vertical direction, and this structure may allow the insertion depth and state of a first extension portion 311 to be checked when the first extension portion 311 is inserted into the first support portion 221.

Of course, the first support portion 221 may also have a roughly cylindrical outer shape with a hollow center.

The second support portion 222 may be formed as a circular band shape extending from an edge of the other side of the first support portion 221 by a certain length in a horizontal direction.

The receiving protrusion 223 is located near an outer edge of the second support portion 222, is formed in a shape bent at a certain angle, and is fastened to a first connection protrusion 313 of the connection unit 300, a description of which will follow.

Specifically, the receiving protrusion 223 may be formed in a part of the outer edge of the second support portion 222, and may have a structural shape that extends from the outer edge in the vertical direction and then extends a certain length in a direction toward the center of the first support portion 221.

The receiving protrusion 223 may be provided in a pair so as to face each other above the outer edge of the second support portion 222.

The connection unit 300 may be detachably attached to the fastening unit 220, serves to securely fix the temperature measurement unit 400 at a predetermined position, and includes a first connection unit 310.

The first connection unit 310 is made of an insulating material, whereby an inner space of the first connection unit may be inhibited from being influenced by external temperature. In an example, the insulating material may include at least one of Bakelite, PVC, Teflon, and silicone rubber; however, the insulating material is not limited thereto as long as the insulating material is capable of blocking external temperature.

The first connection unit 310 includes a first extension portion 311, a first flange portion 312, and a first connection protrusion 313.

The first extension portion 311 is formed in a cylindrical shape extending a certain length. When the first connection unit 310 and the fastening unit 220 are connected to each other in tight contact with each other, the first extension portion is inserted into the first support portion 221, whereby an edge of one side of the first extension portion comes into tight contact with an inner surface of the through-hole 210.

That is, the outer diameter of the first extension portion 311 is formed to have a size that can be in tight contact with the inner diameter of the through-hole 210.

The first flange portion 312 is formed so as to extend from an outer surface of the first extension portion 311 by a certain length in the horizontal direction, and may have an outer diameter equal to the outer diameter of the second support portion 222 of the fastening unit 220.

The first connection protrusion 313 is provided on a part of a lower surface of the first flange portion 312, and has a shape bent at a certain angle.

In other words, the first connection protrusion 313 may have a structural shape that vertically extends in a direction toward the second support portion 222 and then extends a certain length in a direction toward the outside of the first extension portion 311.

The first connection protrusion 313 may be provided in a pair so as to face each other on the lower surface of the first flange portion 312.

Therefore, the first connection protrusion 313 interlocks with the receiving protrusion 223 of the fastening unit 220, and as the first connection unit 310 and the fastening unit 220 rotate in tight contact with each other, the first connection protrusion 313 and the receiving protrusion 223 are fastened, whereby the movement thereof in the vertical direction is limited.

Consequently, attachment and detachment between the first connection unit 310 and the fastening unit 220 are possible by the rotational operation of the first connection protrusion 313 and the receiving protrusion 223.

The temperature measurement unit 400 is configured to measure changes in temperature of the battery cell S located between the first plate 100 and the second plate 200, and includes a temperature sensor 410, a cable 420, and a packing member 430.

The temperature sensor 410 sequentially extends through the first extension portion 311 and the through-hole 210 of the second plate 200, and is a sensor configured to measure the temperature of one surface of the battery cell S exposed through the through-hole 210.

Here, the temperature sensor 410 is not particularly limited, but a non-contact-type temperature sensor as well as a contact-type temperature sensor may be used.

One side of the cable 420 is connected to the temperature sensor 410 and extends a certain length while the other side of the cable is connected to a controller (not shown), and therefore the temperature value measured by the temperature sensor 410 is transmitted to the controller (not shown).

Meanwhile, the packing member 430 is formed in a cylindrical shape with an outer diameter capable of being in tight contact with an inner surface of the first extension portion 311, and may be located in the first extension portion 311. In addition, the cable 420 may be disposed so as to extend through the packing member 430.

The packing member 430 is configured to minimize changes of the battery cell S exposed through the through-hole 210 due to external air.

That is, the packing member 430 may create a sealed state in the first extension portion 311 to block contact between the battery cell S and external air such that the actual temperature of the battery cell S can be measured, thereby improving the reliability and accuracy of the results.

Here, the packing member 430 is preferably made of a material having both thermal insulation properties and a certain degree of elasticity, such as silicone rubber; however, the present invention is not limited thereto.

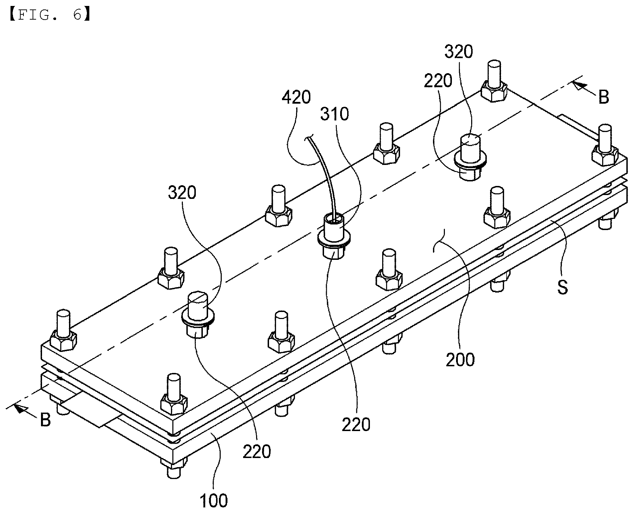

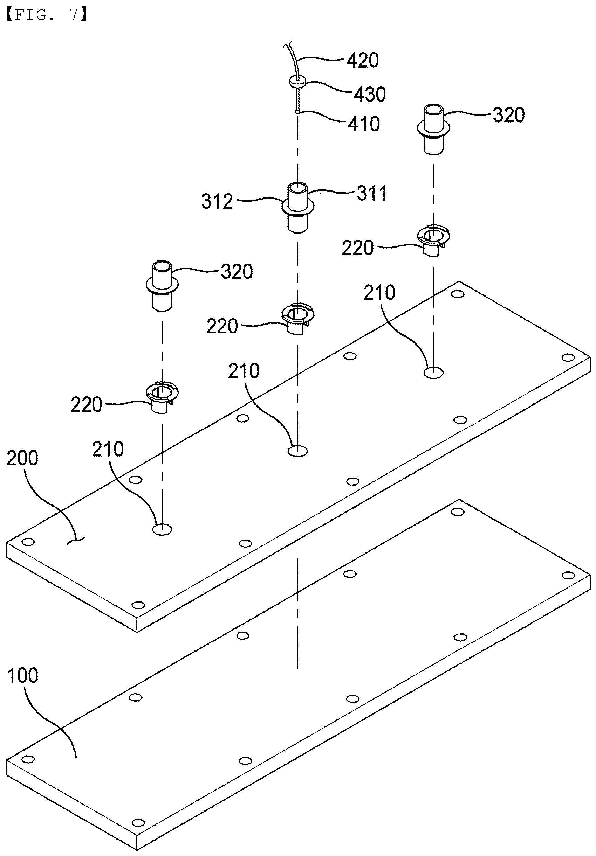

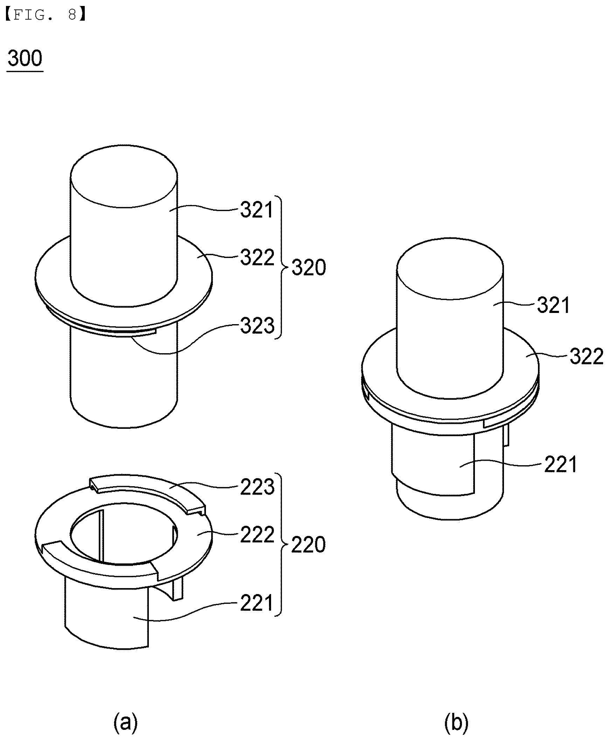

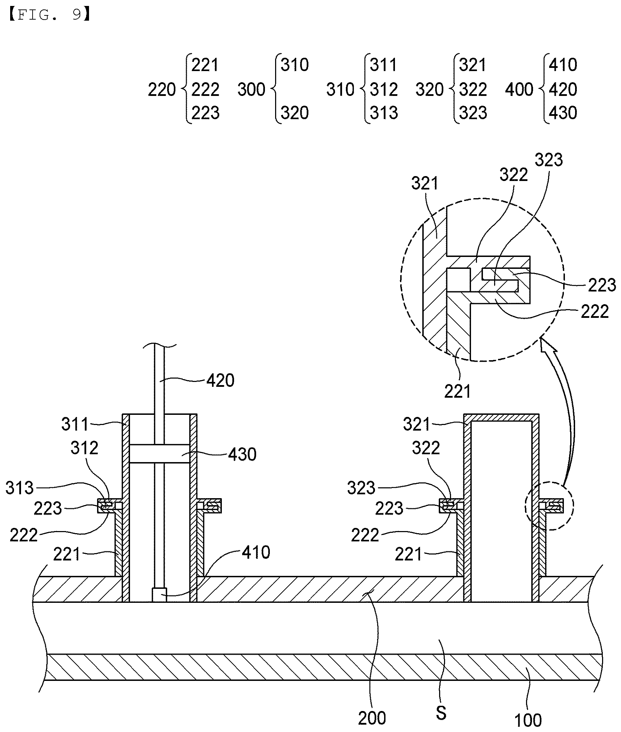

FIG. 6 is a perspective view showing a battery cell temperature measurement apparatus according to a second embodiment of the present invention, and FIG. 7 is an exploded perspective view of the battery cell temperature measurement apparatus shown in FIG. 6. In addition, FIG. 8 is an enlarged perspective view illustrating a coupling structure between a fastening unit and a second connection unit in the battery cell temperature measurement apparatus shown in FIG. 6, and FIG. 9 is a partial vertical sectional view taken along line B-B of FIG. 6.

Referring to FIGs. 6 to 9, the battery cell temperature measurement apparatus according to the second embodiment of the present invention is identical to the battery cell temperature measurement apparatus according to the first embodiment described with reference to FIGs. 2 to 5 except that a plurality of through-holes 210 is provided and a second connection unit 32 is further provided, and therefore a description of the same configuration will be omitted.

In the battery cell temperature measurement apparatus according to the second embodiment, a plurality of through-holes 210 may be formed in a second plate 200, and the plurality of through-holes 210 may be spaced apart at predetermined intervals in an overall length direction. Although not shown in the figures, the plurality of through-holes 210 may also be formed in an overall width direction.

The plurality of through-holes 210 is configured to selectively or simultaneously measure the temperature of a battery cell S at a plurality of positions. In addition, a fastening unit 220 having the same structure as described in the first embodiment is formed in each of the plurality of through-holes 210.

The second connection unit 320 functions as a kind of cap connected to the through-hole 210 where measurement is not performed among the plurality of through-holes 210, namely the fastening unit 220 to which the first connection unit 310 is not fastened.

That is, measurement accuracy may be reduced in the state in which the through-hole 210 where measurement is not performed is open, and therefore it is preferable to block external air.

This second connection unit 320 includes a second extension portion 321, a second flange portion 322, and a second connection protrusion 323.

The second extension portion 321 is formed in a cylindrical shape extending a certain length. When the second connection unit 320 and the fastening unit 220 are connected to each other in tight contact with each other, the second extension portion is inserted into the second support portion 222, whereby an edge of one side of the second extension portion comes into tight contact with an inner surface of the through-hole 210.

That is, the outer diameter of the second extension portion 321 is formed to have a size that can be in tight contact with the inner diameter of the through-hole 210.

Here, unlike the first extension portion 311, the second extension portion 321 must block external air, and therefore one side, the other side, or both sides of the second extension portion 321 are sealed.

The second flange portion 322 is formed so as to extend from an outer surface of the second extension portion 321 by a certain length in the horizontal direction, and may have an outer diameter equal to the outer diameter of the second support portion 222 of the fastening unit 220.

The second connection protrusion 323 is provided on a part of a lower surface of the second flange portion 322, and has a shape bent at a certain angle.

In other words, the second connection protrusion 323 may have a structural shape that vertically extends in a direction toward the second support portion 222 and then extends a certain length in a direction toward the outside of the second extension portion 321.

The second connection protrusion 323 may be provided in a pair so as to face each other on the lower surface of the second flange portion 322.

Therefore, the second connection protrusion 323 interlocks with the receiving protrusion 223 of the fastening unit 220, and as the second connection unit 320 and the fastening unit 220 rotate in tight contact with each other, the second connection protrusion 323 and the receiving protrusion 223 are fastened, whereby the movement thereof in the vertical direction is limited.

Consequently, attachment and detachment between the second connection unit 320 and the fastening unit 220 are possible by the rotational operation of the second connection protrusion 323 and the receiving protrusion 223.

Next, a battery cell temperature measurement method using the battery cell temperature measurement apparatus according to the first embodiment having the aforementioned configuration will be described.

The battery cell temperature measurement method includes a first step of locating a battery cell between the first plate and the second plate, a second step of fixing the first plate and the second plate, and a third step of connecting the first connection unit to the fastening unit provided on the second plate and measuring the temperature of the battery cell through the temperature measurement unit.

First, the first step of locating the battery cell between the first plate and the second plate is a step of seating the battery cell on the first plate and then locating the second plate on the battery cell such that the battery cell is located between the first plate and the second plate.

The second step of fixing the first plate and the second plate is a step of fixing the first plate and the second plate by fastening the first plate and the second plate at edges thereof using a fastening member such as a bolt in the state in which the battery cell is located between the first plate and the second plate.

As the first plate and the second plate are fixed, the battery cell located between the first plate and the second plate is fixed in place, whereby the movement thereof is restricted.

In the third step of connecting the first connection unit to the fastening unit provided on the second plate and measuring the temperature of the battery cell through the temperature measurement unit, the first connection unit is rotated in tight contact with the fastening unit, whereby the receiving protrusion of the fastening unit and the first connection protrusion of the first connection unit interlock with each other and thus are connected and fixed with each other.

At this time, the temperature of the battery cell is continuously or discontinuously measured using the temperature measurement unit, and the measured results are transmitted to the controller.

Meanwhile, when the battery cell temperature measurement apparatus according to the second embodiment is used, the first connection unit may be connected to each of the plurality of through-holes, and measurement may be performed using the temperature measurement unit.

Furthermore, if necessary, the second connection unit may be connected and fixed to any through-hole where temperature measurement is not performed, among the plurality of through-holes, to seal the through-hole.

Those skilled in the art to which the present invention pertains will appreciate that various applications and modifications are possible within the category of the present invention based on the above description.

### (Description of Reference Symbols)

- 100:: First plate
- 200:: Second plate
- 210:: Through-hole
- 220:: Fastening unit
- 221:: First support portion 222: Second support portion
- 223:: Receiving protrusion
- 300:: Connection unit
- 310:: First connection unit
- 311:: First extension portion 312: First flange portion
- 313:: First connection protrusion
- 320:: Second connection unit
- 321:: Second extension portion 322: Second flange portion
- 323:: Second connection protrusion
- 400:: Temperature measurement unit
- 410:: Temperature sensor
- 420:: Cable
- 430:: Packing member
- S:: Battery cell

## Claims

1. A battery cell temperature measurement apparatus comprising:
a first plate in tight contact with one surface of a battery cell;
a second plate in tight contact with the other surface of the battery cell, the second plate including at least one through-hole;
a connection unit comprising a first connection unit detachably coupled to the through-hole;
a temperature measurement unit extending through the connection unit and the through-hole, the temperature measurement unit being configured to measure a temperature of the battery cell; and
a fastening unit coupled to the connection unit and located on an outer circumferential surface of the through-hole.

2. The battery cell temperature measurement apparatus according to claim 1, wherein
the fastening unit comprises a first support portion extending a certain length in a state in which one side thereof is fixed to the second plate; a second flange-shaped support portion located on an edge of the other side of the first support portion; and a receiving protrusion located on the second flange-shaped support portion, the receiving protrusion being bent at a certain angle, and
the first connection unit comprises a first cylindrical extension portion extending a certain length; a first flange portion located on an outer surface of the first cylindrical extension portion; and a first connection protrusion located on a lower surface of the first flange portion and fastened to the receiving protrusion, the first connection protrusion being bent at a certain angle.

3. The battery cell temperature measurement apparatus according to claim 2, wherein the first connection unit includes an insulating material.

4. The battery cell temperature measurement apparatus according to claim 3, wherein the insulating material comprises at least one of Bakelite, PVC, Teflon, and silicone rubber.

5. The battery cell temperature measurement apparatus according to claim 3, wherein, when the fastening unit and the first connection unit are fastened together, an edge of one side of the first cylindrical extension portion of the first connection unit comes into tight contact with an inner surface of the through-hole of the second plate.

6. The battery cell temperature measurement apparatus according to claim 2, wherein the temperature measurement unit comprises a temperature sensor in tight contact with one surface of the battery cell, a cable connected to the temperature sensor, the cable having a certain length, and a cylindrical packing member wrapping around the cable, the cylindrical packing member having an outer diameter in tight contact with an inner surface of the first cylindrical extension portion.

7. The battery cell temperature measurement apparatus according to claim 2, wherein
the at least one through-hole of the second plate is a plurality of through-holes, and
the battery cell temperature measurement apparatus further comprises a second connection unit configured to seal at least one through-hole of the plurality of through-holes.

8. The battery cell temperature measurement apparatus according to claim 7, wherein the plurality of through-holes are spaced apart at predetermined intervals in an overall length direction or an overall width direction of the battery cell.

9. The battery cell temperature measurement apparatus according to claim 7, wherein
the second connection unit comprises a second cylindrical extension portion extending a certain length, a second flange portion located on an outer surface of the second cylindrical extension portion, and a second connection protrusion located on a lower surface of the second flange portion and fastened to the receiving protrusion, the second connection protrusion being bent at a certain angle, and
one side or the other side of the second cylindrical extension portion is sealed.

10. A battery cell temperature measurement method using the battery cell temperature measurement apparatus according to any one of claims 1 to 9, the battery cell temperature measurement method comprising:
a first step of placing a battery cell between the first plate and the second plate;
a second step of fixing the first plate and the second plate; and
a third step of connecting the first connection unit to the fastening unit located on the second plate and measuring a temperature of the battery cell using the temperature measurement unit.
